# FASCICULE DE BREVET EUROPEEN

(11) **EP 2 159 568 B1**
(45) Date de publication et mention de la délivrance du brevet: **01.08.2012**
(21) Numéro de dépôt: 09168888.7
(22) Date de dépôt: 28.08.2009
(51) Int. Cl.: G01N 21/55

(54) **Dispositif et procédé de mesure du coefficient de luminance rétroréfléchie de marquages routiers**
Messgerät und -verfahren des retroreflektiven Luminanzkoeffizienten von Fahrbahnmarkierungen
Device and method for measuring the retro-reflected luminance coefficient of road markings

(30) Priorité: 29.08.2008 FR 0855812
(43) Date de publication de la demande: 03.03.2010
(73) Titulaire: Institut Français des Sciences et Technologies des Transports, de l'Aménagement et des Réseaux, 77420 Champs sur Marne (FR)
(72) Inventeur: Guillard, Yannick, 67310, WASSELONNE (FR); Pilniere, Franck, 85000, LA ROCHE SUR YON (FR); Kraenner, Edith, 67270, WICKERSHEIM (FR)
(74) Mandataire: Intès, Didier Gérard André

(56) Documents cités:
- WO-A-2004/074582
- FR-A- 2 661 248
- US-A- 4 629 319
- US-A- 4 721 389
- "On site quality control of road markings & road surfaces in accordance with CEN specifications. LTL2000 RETROMETER MANUAL" INTERNET CITATION, [Online] XP002225022 Extrait de l'Internet: URL:http://www.delta.dk/services/products/ road-test-equip/04_manua/ltl200 0/manua_uk.pdf> [extrait le 2002-11-24]

## Description

La présente invention concerne un dispositif et un procédé de mesure du coefficient de luminance rétroréfléchie R_{L} d'un marquage routier, prévus pour permettre la réalisation de mesures depuis un véhicule.

Pour mesurer ce coefficient R_{L}, on utilise de manière connue un dispositif de mesure embarqué sur un véhicule, comme par exemple celui décrit par le brevet français FR2661248.

Ce dispositif de mesure réalise une mesure de la manière suivante :

Dans une première étape, un dispositif d'émission et de projection de faisceau lumineux projette un faisceau lumineux en lumière blanche sur une surface, à l'emplacement auquel le marquage routier doit être mesuré. Le terme 'faisceau lumineux' désigne ici un rayonnement lumineux, projeté continûment pendant un laps de temps (sans interruption), dans une direction spécifique, c'est-à-dire plus précisément dans un angle solide connexe donné.

Ainsi, avec le dispositif décrit par le brevet FR2661248 ('le dispositif antérieur'), la projection du faisceau lumineux forme et définit sur le sol une surface éclairée.

Suite à cet éclairage, la surface éclairée frappée par le faisceau lumineux incident émet un rayonnement appelé rayonnement réfléchi. Dans une deuxième étape, des moyens d'acquisition du dispositif de mesure réalisent l'acquisition d'une partie de ce rayonnement réfléchi qui revient vers l'arrière, par rapport à la direction d'éclairage : il s'agit ainsi d'un rayonnement rétro-réfléchi.

Dans une troisième étape, des moyens de traitement du signal traitent les signaux délivrés par les moyens d'acquisition, et déterminent le coefficient de luminance R_{L} du marquage routier.

La deuxième étape d'acquisition du rayonnement réfléchi peut être détaillée davantage. Le dispositif de mesure exploite le rayonnement réfléchi de la manière suivante : La surface éclairée est divisée virtuellement en plusieurs surfaces éclairées élémentaires. Ces différentes surfaces éclairées élémentaires forment des bandes parallèles, situées les unes à côté des autres à l'intérieur de la surface éclairée, celle-ci ayant la forme d'une grande zone sensiblement rectangulaire, aux bords légèrement bombés vers l'extérieur.

Les moyens d'acquisition acquièrent séparément les rayonnements émis par les différentes surfaces éclairées élémentaires, en capturant les rayonnements émis et en les concentrant sur les surfaces sensibles de photodiodes.

Les surfaces éclairées ayant émis le rayonnement réfléchi qui est acquis par les moyens d'acquisition, sont dites 'surfaces exploitées'. Dans ce dispositif, les surfaces exploitées sont les différentes bandes parallèles citées précédemment.

Le dispositif de mesure est conçu de telle sorte qu'au moins une (et en pratique, au moins deux ou trois) des surfaces exploitées soit recouverte entièrement du marquage routier dont le coefficient R_{L} doit être mesuré. Cette surface exploitée est alors dite 'surface exploitée entièrement marquée' ; le rayonnement émis par cette surface peut être exploité pour fournir une valeur significative du coefficient R_{L}. (Inversement, si une partie de la surface exploitée ne portait pas de marquage, l'intensité du rayonnement rétroréfléchi perçu par le dispositif d'acquisition ne serait pas représentative de la qualité du marquage routier, et cette surface exploitée ne permettrait donc pas la détermination exacte du coefficient R_{L}).

Les trois étapes de mesure, qui viennent d'être présentées, concernent la détermination de la valeur du coefficient R_{L} en un emplacement donné.

De manière générale, le coefficient R_{L} d'un marquage routier n'est pas mesuré habituellement uniquement en un point ; au contraire, il est mesuré successivement à différents emplacements sur un itinéraire donné, voire sur une voie de circulation donnée d'un itinéraire donné.

Ces emplacements sont régulièrement espacés le long de l'itinéraire de mesure prévu. Par exemple, les emplacements de mesure peuvent être distants deux à deux de 40 cm. Le dispositif de mesure est embarqué à bord d'un véhicule porteur, qui déplace le dispositif de mesure et le positionne successivement aux emplacements prévus pour les mesures.

Les mesures ont lieu alors que le véhicule est en mouvement, dans un laps de temps suffisamment bref pour pouvoir considérer le dispositif de mesure comme sensiblement immobile par rapport à la chaussée et au marquage mesuré.

La réalisation de la mesure à partir d'un véhicule en mouvement relativement rapide (jusqu'à 110 km/h, par exemple) entraine différentes difficultés.

Tout d'abord, il n'est pas possible de garantir un positionnement très précis du véhicule porteur, et donc du dispositif de mesure, par rapport au marquage à mesurer. Pour pallier à cette difficulté, la mesure du coefficient de luminance rétroréfléchie du marquage comporte l'acquisition d'informations non seulement sur le marquage routier lui même, mais sur un emplacement de mesure nettement plus grand que la partie du marquage réellement exploitée pour la mesure.

D'autre part, étant embarqué sur le véhicule, le dispositif de mesure est alimenté par la batterie de celui-ci. Sa consommation d'électricité, et notamment la puissance électrique instantanée consommée, doivent donc être limitées.

Pour minimiser cette consommation d'énergie par le dispositif de mesure, il faut principalement minimiser l'énergie consommée pour l'éclairage. Il faut donc réduire autant que possible l'aire de la surface éclairée. Cela étant, la largeur de la surface éclairée doit rester suffisante pour assurer que la surface éclairée inclut effectivement, compte tenu des écarts de trajectoire inévitables du véhicule porteur, au moins une surface élémentaire dont une partie est entièrement incluse dans le marquage et est susceptible de constituer une 'surface exploitée entièrement marquée'. (La largeur est ici la direction perpendiculaire à la direction d'éclairage, qui est sensiblement parallèle à l'axe de la chaussée).

En pratique, dans le dispositif antérieur cité, le faisceau lumineux est projeté pour former une surface éclairée sensiblement rectangulaire, convexe, dont la largeur est de l'ordre de 50 cm. Comme cette largeur de la surface éclairée est relativement faible, le conducteur du véhicule doit en permanence rester vigilant de manière à maintenir le dispositif de mesure sensiblement dans l'axe du marquage à mesurer.

Cette exigence d'alignement du dispositif avec le marquage rend la conduite difficile, notamment sur de longues distances. Inversement, comme la surface éclairée pour la mesure est de faible largeur, le système peut être alimenté par la batterie du véhicule.

Enfin, compte tenu de la puissance électrique instantanée élevée qu'il consomme (15 à 20 Ampères), le dispositif ne comporte qu'une seule tête de mesure, ne permettant la mesure que sur un marquage à la fois, et sur une largeur d'environ 50 cm comme cela a été indiqué.

Un premier objectif de l'invention est de proposer un dispositif pour mesurer le coefficient R_{L} de luminance rétroréfléchie de marquages routiers à des emplacements successifs, apte à être embarqué sur un véhicule, comprenant un dispositif d'émission et projection de faisceau lumineux en lumière non cohérente, apte à projeter un faisceau lumineux vers une surface de mesure, des moyens d'acquisition du rayonnement lumineux réfléchi par la surface de mesure, des moyens de traitement du signal, aptes à déterminer le coefficient de luminance rétroréfléchie R_{L} à partir des signaux délivrés par les moyens d'acquisition, et consommant une puissance instantanée réduite, et notamment réduite par rapport à celle du dispositif antérieur. Grâce à cette réduction de la puissance instantanée consommée, la largeur de mesure peut être accrue par rapport au dispositif antérieur ; ou encore, l'intensité du courant prélevé sur la ou les batterie(s) peut être réduite, à largeur mesurée égale.

Cet objectif est atteint grâce au fait que ledit dispositif d'émission et projection de faisceau lumineux est agencé pour projeter une pluralité de faisceaux lumineux éclairant chacun une surface éclairée élémentaire, lors d'une mesure du coefficient de luminance rétroréfléchie du marquage à un emplacement de mesure, et que, une surface éclairée cumulée étant la réunion des surfaces éclairées élémentaires, à chaque instant pendant la mesure audit emplacement, la surface éclairée est strictement incluse dans la surface éclairée cumulée. De manière équivalente, la surface éclairée cumulée peut se définir également comme la surface regroupant tous les points faisant partie d'au moins une surface éclairée élémentaire.

Ainsi, comme à chaque instant pendant la mesure, la surface éclairée est strictement incluse dans la surface éclairée cumulée, son aire est moindre que celle de la surface éclairée cumulée. Aussi, la puissance électrique nécessaire à chaque instant est moindre que celle nécessaire à l'éclairage de la surface éclairée cumulée, et donc moindre que celle consommée par le dispositif antérieur.

On comprend naturellement que par ailleurs, les moyens d'acquisition sont prévus pour acquérir les différents rayonnements lumineux réfléchis au fur et à mesure que ceux-ci sont émis, et de même les moyens de traitement du signal sont prévus pour acquérir et traiter les signaux au fur et à mesure que ceux-ci sont transmis par les moyens d'acquisition suite à l'acquisition des rayonnements lumineux réfléchis.

Ainsi, le remplacement du faisceau lumineux unique du dispositif de mesure antérieur à une pluralité de faisceaux dans le dispositif selon l'invention permet avantageusement d'augmenter la largeur mesurée sans illuminer de surface inutilement (par exemple, sans augmenter la surface mesurée), grâce à l'efficacité énergétique de la solution retenue. En particulier, l'émission d'une pluralité de faisceaux lumineux permet une consommation d'énergie moindre que celle dissipée par un faisceau unique, utilisé par exemple en balayage.

L'énergie électrique consommé, que ce soit la puissance instantanée ou encore la quantité d'électricité consommée, peut être réduite de différentes manières selon le mode de réalisation choisi.

Dans ce but, les différents perfectionnements suivants, qui peuvent éventuellement être conjugués, peuvent être adoptés :

Dans un mode de réalisation, les faisceaux lumineux sont regroupés en différents groupes de faisceaux, et les groupes de faisceaux sont projetés successivement pour éclairer les surfaces élémentaires correspondantes.

Dans un mode de réalisation, le dispositif est agencé de telle sorte que, lors d'une mesure du coefficient R_{L} de luminance rétroréfléchie du marquage à un emplacement, la surface éclairée cumulée est strictement incluse dans son enveloppe convexe. Ainsi, la surface éclairée cumulée est non-convexe, ou, en d'autres termes, les surfaces éclairées élémentaires sont disposées de telle sorte qu'à l'issue de la mesure audit emplacement, il reste une portion de surface non éclairée située entre deux surfaces éclairées élémentaires.

Ce mode d'éclairage permet avantageusement de limiter la puissance consommée par le dispositif de mesure. En effet, comme la surface éclairée cumulée est strictement incluse dans son enveloppe convexe, son aire est moindre que celle de l'enveloppe convexe. De ce fait, l'énergie nécessaire pour éclairer la surface éclairée cumulée, pour permettre la mesure du coefficient R_{L} sur cette surface, est plus faible que l'énergie utilisée par le dispositif antérieur, dont la surface éclairée était une zone convexe (en raison notamment du fait qu'elle était formée par un faisceau unique).

Selon un mode de réalisation, le dispositif est agencé de telle sorte que, lors d'une mesure du coefficient de luminance rétroréfléchie du ou des marquages à un emplacement, les surfaces éclairées élémentaires sont sensiblement disjointes deux à deux. Cette disposition des faisceaux, et donc des surfaces éclairées élémentaires, permet d'élargir simplement la largeur de la surface de mesure, en répartissant les surfaces éclairées élémentaires sur une plus grande largeur, sans augmenter l'aire de la surface éclairée cumulée.

En outre, le fait que les surfaces éclairées élémentaires soient sensiblement disjointes deux à deux contribue à une précision de mesure élevée. En effet, chaque faisceau lumineux génère ainsi une acquisition sensiblement indépendante des acquisitions réalisées pour les autres faisceaux lumineux, et ainsi les différentes acquisitions ne se perturbent pas entre elles.

Selon un mode de réalisation, le dispositif d'émission et projection de faisceau lumineux comporte une pluralité de projecteurs, aptes à former simultanément une pluralité de faisceaux lumineux. Par projecteur, on désigne ici la ou les pièces du dispositif d'émission et projection de faisceau lumineux qui servent à projeter un faisceau lumineux. Par exemple, un projecteur peut être constitué par une extrémité d'une fibre optique qui émet un faisceau lumineux, et une lentille d'un dispositif de focalisation, qui focalise le faisceau lumineux émis de manière à le projeter dans la direction d'éclairage souhaitée. Les différents projecteurs peuvent être disposés en particulier de manière à émettre des faisceaux lumineux sensiblement parallèles.

Selon un mode de réalisation, le dispositif d'émission et projection de faisceau lumineux comporte un dispositif de pivot permettant de diriger des faisceaux dans différentes directions d'éclairage. En particulier, avantageusement un projecteur unique faisant partie du dispositif de pivot ou utilisé en combinaison avec celui-ci, permet d'émettre des faisceaux lumineux successivement dans différentes directions d'éclairage pour éclairer la surface à mesurer. Il n'est donc pas nécessaire d'avoir recours à plusieurs projecteurs pour projeter des faisceaux dans différentes directions d'éclairage. Selon une variante de ce mode de réalisation, le dispositif de pivot comporte un miroir pivotant.

Selon un mode de réalisation, le dispositif d'émission et projection de faisceau lumineux comporte une source lumineuse, et un dispositif de commutation électronique qui allume et éteint successivement celle-ci. Naturellement le dispositif de commutation électronique peut agir le cas échéant sur l'ensemble des sources lumineuses du dispositif d'émission et projection de faisceau lumineux.

Alors que le dispositif antérieur comportait un hacheur mécanique constitué par un disque percé de fentes pour réaliser la modulation d'intensité du faisceau lumineux émis pour la mesure, dans ce mode de réalisation, la commutation de faisceaux lumineux émis est réalisée de manière électronique. Grâce à cela, la fréquence de commutation des faisceaux lumineux peut être fortement augmentée, et atteindre plus de 1000 Hz, et notamment plus de 3000 Hz. Avec un tel principe de commutation, la source lumineuse ne consomme de courant qu'une partie du temps. Grâce à cela, la puissance électrique consommée par le dispositif de mesure est réduite.

Selon un mode de réalisation, le dispositif d'émission et projection de faisceau lumineux comporte au moins deux sources lumineuses. Ainsi, la puissance lumineuse dégagée est répartie sur un ensemble de sources lumineuses. Grâce à cette répartition, l'évacuation de chaleur est facilitée, et l'échauffement du dispositif d'éclairage est plus faible ce qui évite des surchauffes que celui-ci ne pourrait supporter. Notamment, dans certains modes de réalisation, les sources lumineuses sont allumées successivement, laissant ainsi du temps à celles qui sont éteintes pour se refroidir.

Selon un mode de réalisation, un dispositif de commutation électronique présente un mode séquentiel dans lequel des sources lumineuses sont allumées et éteintes séquentiellement.

Selon un mode de réalisation, deux sources différentes génèrent simultanément des faisceaux lumineux distincts, projetés dans des directions d'éclairage sensiblement disjointes. Ainsi, la correction des propriétés des faisceaux causées par les spécificités propres à chaque source peuvent être contrôlées et corrigées séparément, ce qui permet une amélioration de la précision de mesure (ou une réduction de l'incertitude de mesure).

Selon un mode de réalisation, le dispositif d'acquisition comporte un écran limitant l'amplitude verticale d'un rayonnement lumineux réfléchi exploité pour la mesure. L'écran comporte généralement une partie basse et une partie haute distinctes, qui occultent respectivement une portion basse et une portion haute du rayonnement lumineux réfléchi. Ces portions du rayonnement réfléchi sont émises par les parties respectivement proximale et distale, par rapport au dispositif d'émission et projection de faisceau lumineux, de la surface élémentaire éclairée.

Du fait de cette occultation, dans l'acquisition considérée, la surface exploitée pour la mesure est réduite. Par conséquent, la probabilité que la surface exploitée soit marquée sur la totalité de sa surface, et puisse donc constituer une 'surface exploitée entièrement marquée', est accrue.

En pratique, l'écran limite l'amplitude verticale des rayonnements réfléchis de telle sorte que la surface dont ils proviennent soit incluse, et de préférence largement incluse, dans l'un des marquages que l'on cherche à mesurer.

Selon un mode de réalisation, au moins une source lumineuse est déportée et sa lumière est conduite par fibre optique jusqu'à un projecteur du dispositif d'émission et de projection de faisceau. De la sorte, la source lumineuse peut être disposée dans l'habitacle du véhicule, ce qui accroît sa durée de vie.

Selon un mode de réalisation, le dispositif d'émission et projection de faisceau lumineux comporte une source lumineuse et au moins deux fibres optiques conduisant la lumière émise par celle-ci. Ainsi, plusieurs fibres sont utilisées pour transmettre la lumière d'une même source de lumière. Cela permet d'augmenter largement le nombre de faisceaux lumineux émis, sans augmenter en même proportion le nombre de sources lumineuses.

Selon un mode de réalisation, une source lumineuse est une diode électroluminescente ou LED, notamment en lumière blanche. De telles sources sont capables, contrairement à des ampoules à incandescence, de supporter des cycles d'allumage / extinction à des fréquences élevées, dépassant 1 kiloHerz.

Selon un mode de réalisation, le dispositif d'émission et projection de faisceau lumineux comporte au moins un projecteur projetant un faisceau lumineux de biais par rapport à l'axe du véhicule, les moyens d'acquisition étant disposés également de manière à recevoir le rayonnement réfléchi de biais par rapport à l'axe du véhicule. La mesure de biais, avantageusement permet au conducteur du véhicule de piloter celui-ci de manière normale sur la voie de circulation pour véhicules qu'il emprunte, tout en assurant avec le dispositif la mesure de marquages situés sur le côté de la voie, que ce soit en axe et/ou en rive.

Dans un mode de réalisation, les emplacements de mesures successifs peuvent se superposer partiellement ou être adjacents.

Un second objectif de l'invention est de proposer un procédé de mesure à des emplacements successifs du coefficient de luminance rétroréfléchie (R_{L}) d'un marquage routier, et présentant, pour une largeur de la surface de mesure donnée, une puissance consommée instantanée réduite par rapport au procédé de mesure antérieur cité, le procédé de mesure devant être mis en oeuvre depuis un véhicule routier.

Ce procédé peut être mis en oeuvre également sans réduction de la puissance consommée instantanée, pour accroître au contraire la largeur de mesure, et obtenir ainsi si on le souhaite une largeur de mesure accrue par rapport à celle mesurée à l'aide du procédé antérieur.

Cet objectif est atteint grâce au fait que pour réaliser une mesure à un emplacement, le procédé comprend les étapes suivantes :
on projette une pluralité de faisceaux lumineux de lumière non cohérente, chacun éclairant une surface éclairée élémentaire ;
on réalise l'acquisition des rayonnements lumineux réfléchis à l'aide de moyens d'acquisition,
on traite les signaux ainsi acquis pour déterminer le coefficient de luminance rétroréfléchie du marquage routier audit emplacement,
la projection des faisceaux lumineux étant telle que, une surface éclairée cumulée étant la réunion des surfaces éclairées élémentaires, à chaque instant pendant la mesure audit emplacement, la surface éclairée est strictement incluse dans la surface éclairée cumulée.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
la figure 1 est une représentation en perspective d'un véhicule sur lequel est monté un dispositif de mesure selon l'invention ;
la figure 2 est une autre vue de dessus, de ce véhicule ;
la figure 3 est une vue de dessus de la zone éclairée par le dispositif de mesure selon l'invention présenté par l'une des figures 1 ou 2 ;
la figure 4 est une vue schématique du dispositif de mesure selon l'invention ;
la figure 5 est une vue schématique latérale du dispositif de mesure selon l'invention faisant apparaître le faisceau lumineux incident et le rayonnement lumineux réfléchi par une surface portant un marquage à mesurer ;
les figures 6 et 7 présentent l'aspect du rayonnement réfléchi respectivement 100 et avec occupation partielle des parties haute et basse du rayonnement réfléchi ;
la figure 8 présente un autre mode de réalisation de tête de mesure d'un dispositif de mesure selon l'invention.

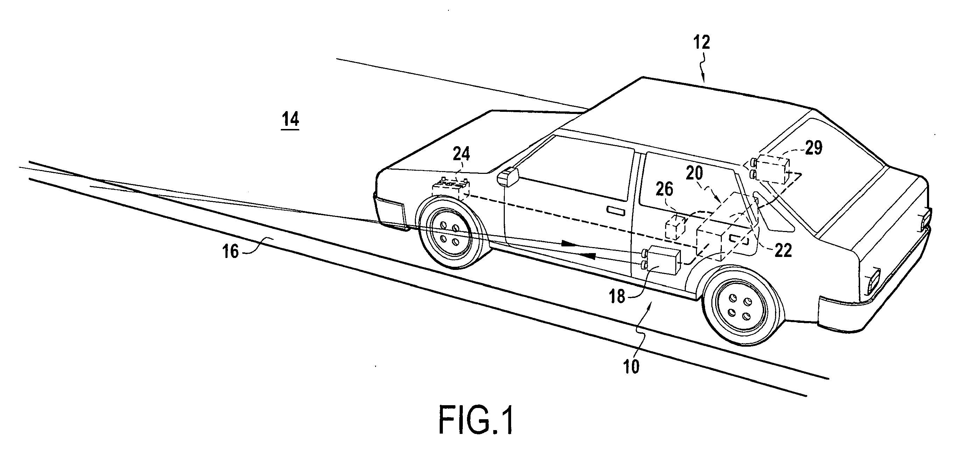

En faisant référence à la figure 1, un dispositif de mesure selon l'invention va maintenant être décrit.

Ce dispositif 10 peut être monté à bord de tous véhicules automobiles, par exemple un véhicule automobile léger tel que représenté sur la figure 1. Le dispositif de mesure 10 est ainsi monté sur un véhicule 12 circulant sur une chaussée 14. Sur cette chaussée, sont réalisés des marquages routiers 16. Ces marquages sont généralement en forme de bandes continues ou discontinues, simples ou parfois doubles; ils peuvent être placés d'un côté ou de l'autre de la voie de circulation. Sur la figure 1, le marquage routier 16 mesuré consiste en une bande unique disposée sur le côté gauche de la voie de circulation du véhicule 12. Habituellement, la largeur de ce type de marquage est de l'ordre de 10 à 15 cm, voire plus.

Le dispositif de mesure 10 sert à mesurer la luminescence rétroréfléchie du marquage routier 16.

Il comporte deux têtes de mesure 18 et 29, placées à l'extérieur du véhicule, et plus précisément à l'extérieur des portières arrière gauche et droite de celui-ci. La position des têtes de mesure 18 et 29 est choisie de telle sorte que celles-ci soient en vue directe de l'emplacement de mesure choisi.

Du fait des exigences des normes pour la mesure de coefficient de luminescence rétroréfléchie R_{L} de marquage routier, l'emplacement de mesure, qui est la surface à l'intérieur de laquelle va être réalisée la détermination du coefficient R_{L}, se trouve à environ 6 mètres en avant de la tête de mesure, et la tête de mesure est disposée à proximité du sol, à une quinzaine de centimètres de celui-ci.

En outre, le dispositif de mesure 10 comporte un boîtier 20 abritant une unité centrale 22 située à l'intérieur de celui-ci. L'unité centrale 22 est alimentée électriquement par la batterie 24 du véhicule et par une batterie additionnelle 26. Cette batterie additionnelle 26 est rendue nécessaire par la présence de deux têtes de mesures sur le véhicule et en fonction des caractéristiques du véhicule. La lumière émise par le dispositif est émise dans l'unité centrale 22, et transmise par fibres optiques respectivement jusqu'aux deux têtes de mesure 18 et 29. La lumière rétroréfléchie est également transmise depuis les têtes de mesure 18 et 29 vers l'unité centrale 22 au moyen de fibres optiques.

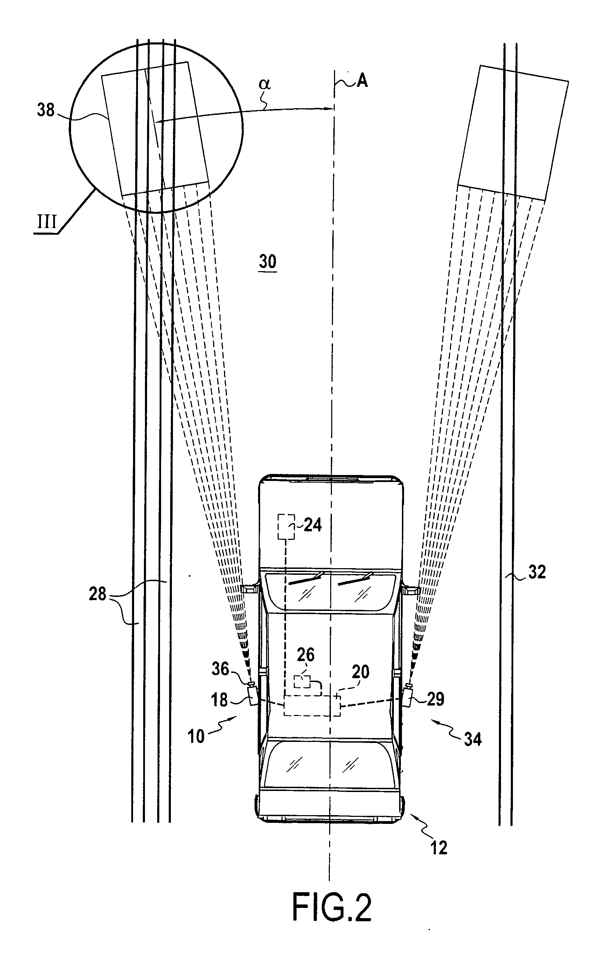

La figure 2 fait apparaître la configuration de mesure lorsque le véhicule 12 mesure simultanément un marquage routier 28 situé sur le côté gauche de la chaussée 30 et un marquage routier 32 situé sur le côté droit de celle-ci. Comme les fonctions réalisées sont les mêmes pour la mesure du marquage 28 sur le côté gauche ou du marquage 32 sur le côté droit du véhicule, ces fonctions et les équipements permettant leur réalisation ne seront décrits qu'en référence à la mesure réalisée sur le côté gauche du véhicule.

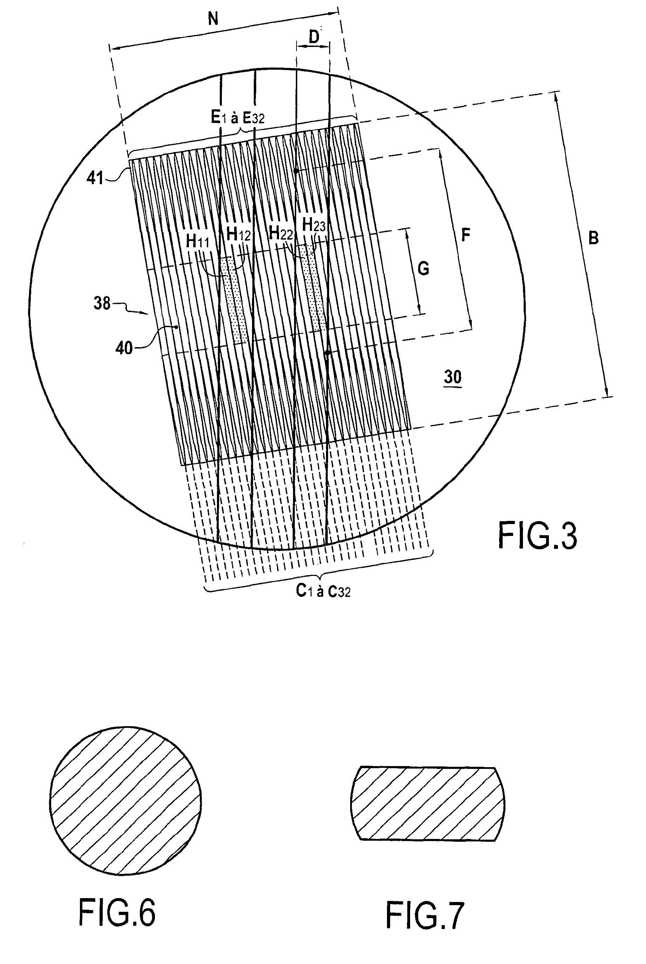

Le dispositif de mesure 10 comporte un dispositif d'émission et projection de faisceaux lumineux en lumière blanche 34 et un dispositif d'acquisition du rayonnement réfléchi 42. Le dispositif d'émission 34 comporte un ensemble de diodes électroluminescentes qui produisent de la lumière. Cette lumière est transmise par des fibres optiques jusqu'à la tête de mesure 18. Elle est alors émise par les extrémités des fibres optiques à l'intérieur de la tête de mesure 18 pour former des faisceaux lumineux (trente-deux faisceaux). Ces faisceaux lumineux sont focalisés par un dispositif de focalisation 36 disposé à l'intérieur de la tête de mesure 18, et projetés vers l'avant de la tête de mesure 18. En vue de dessus, les différents faisceaux sont projetés suivant un angle α, par rapport à l'axe A de la chaussée 30. Typiquement, l'angle α vaut de 5° à 10°, voire davantage : Dans certains modes de réalisation de l'invention, l'angle α peut atteindre voire dépasser 90°. Les faisceaux lumineux ainsi projetés par la tête de mesure éclairent une surface éclairée cumulée (41 sur la figure 3), globalement inscrit dans l'emplacement de mesure 38. L'emplacement de mesure 38 couvre naturellement les deux bandes à mesurer du marquage routier 28, et va maintenant être décrit en relation avec la figure 3.

Cet emplacement de mesure 38 est la surface sensiblement rectangulaire à l'intérieur de laquelle s'inscrit la surface éclairée cumulée 41, dans laquelle est réalisée la détermination du coefficient R_{L}. L'emplacement de mesure 38 s'étend sur une profondeur B dans une direction radiale par rapport à la tête de mesure 18. L'éclairage de la surface éclairée cumulée 41 n'est pas fait de manière uniforme par un faisceau unique. Au contraire, la surface éclairée cumulée 41 est éclairée par trente-deux faisceaux incidents, sensiblement parallèles, C1 à C32.

Au contact du sol, ces faisceaux forment dans la surface 38 trente-deux ellipses éclairées E1 à E32 ; la surface éclairée cumulée 41 est formée par la réunion de ces ellipses. Sur le dispositif de mesure représenté, grâce au nombre élevé de faisceaux lumineux, et au fait que ceux-ci ne soient pas éclairés simultanément, la surface éclairée cumulée 41 présente une largeur N de un mètre, soit le double du dispositif antérieur. Les grands axes des différentes ellipses E1 à E32 sont sensiblement parallèles. Les ellipses E1 à E32 sont disjointes deux à deux et sont juxtaposées les unes à côté des autres dans la direction perpendiculaire à la direction d'éclairage. Du fait de l'angle d'incidence α des faisceaux lumineux C1 à C32 par rapport à l'axe A de la chaussée, et de la largeur D des marquages routiers à mesurer, chacune des ellipses éclairées E1 à E32 formées sur la chaussée 30 ne s'étend au-dessus de l'une des bandes de marquage routiers que sur au plus une distance moyenne F, mesurée par rapport à la tête de mesure 18, que l'on peut dénommer également profondeur moyenne F (par analogie avec une profondeur de champ).

Pour mesurer le coefficient R_{L} de luminance rétro-réfléchie du marquage routier 28, il faut que le rayonnement réfléchi exploité ne provienne que d'une surface entièrement marquée, c'est-à-dire entièrement incluse dans le marquage routier. Pour respecter cette exigence, le dispositif de mesure n'exploite pas le rayonnement réfléchi provenant de la totalité des surfaces éclairées élémentaires, mais seulement celui provenant d'une partie de ces surfaces éclairées élémentaires. La partie exploitée des surface éclairées élémentaires est la bande centrale 40 de celles-ci, de profondeur G. La profondeur G est choisie de manière à être nettement inférieure à la profondeur F.

Par ailleurs, comme les ellipses Eᵢ sont suffisamment serrées, et de largeur suffisamment faible par largeur à la largeur D du marquage routier mesuré, et comme la profondeur G est suffisamment réduite, le dispositif éclaire lors d'une mesure plusieurs surfaces élémentaires constituant des 'surfaces exploitées entièrement marquées'. Chacune de ces surfaces est située à l'intérieur de la bande centrale mesurée 40 dans une ellipse donnée, et est située entièrement au-dessus d'une partie marquée du marquage routier 28. Sur la figure 3 apparaissent quatre telles surfaces exploitées entièrement marquées, à savoir deux surfaces pour chacune des deux bandes du marquage routier 28 : Ce sont les surfaces représentées en grisé H11, H12, et H22, H23.

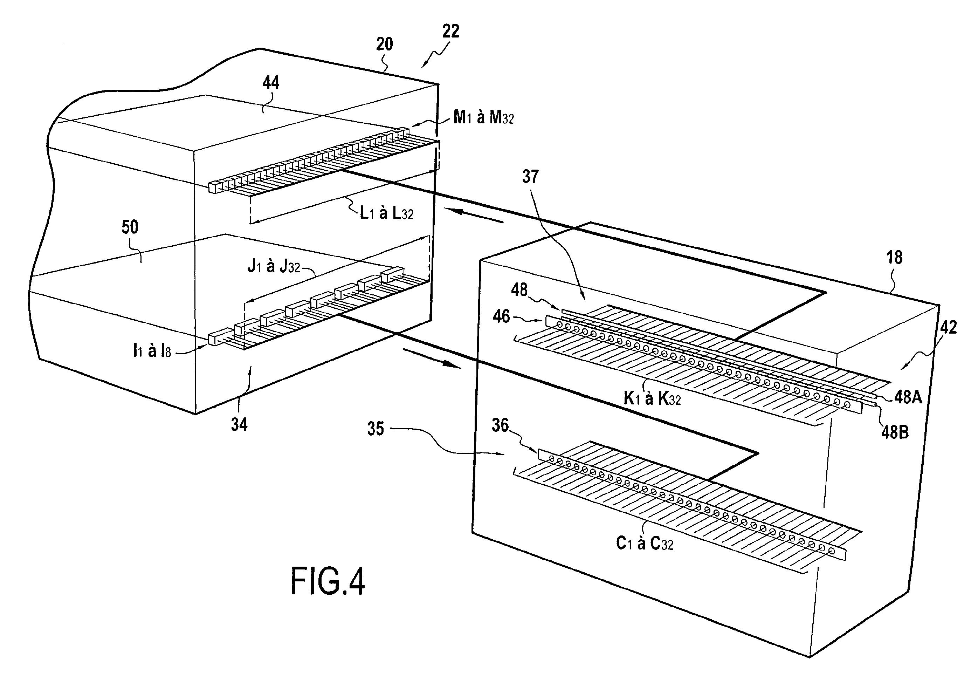

En faisant référence à la figure 4, la structure du dispositif de mesure 10 va maintenant être détaillée.

Celui-ci comporte une unité centrale 22 située dans un boîtier 20, et une tête de mesure 18, extérieure au véhicule. Le dispositif de mesure 10 comporte deux ensembles fonctionnels principaux : d'une part le dispositif d'émission et de projection de faisceaux lumineux 34, d'autre part, les moyens d'acquisition de faisceaux lumineux réfléchis 42 et les moyens de traitement du signal 44. L'unité centrale 22 comporte des moyens informatiques, par exemple un micro-ordinateur, et des cartes électroniques. Le dispositif 34 d'émission et de projection des faisceaux lumineux comporte huit diodes électroluminescentes I1 à I8 alimentées et commandées par une carte électronique de l'unité centrale 22. La lumière émise respectivement par chacune de ces huit diodes I1 à I8 est captée par quatre fibres optiques. L'ensemble de ces quatre fois huit fibres optiques constitue ainsi un faisceau de trente-deux fibres optiques J1 à J32. Les trente-deux fibres optiques J1 à J32 sont ainsi à même de produire trente-deux faisceaux lumineux à trente-deux positions différentes.

Les faisceaux lumineux C1 à C32 émis aux extrémités des fibres optiques J1 à J32 sont chacun de section sensiblement circulaire. Ces faisceaux C1 à C32 sont focalisés par un dispositif de focalisation 36, réglé pour que la lumière émise par chacune des fibres forme sur le sol une ellipse Eᵢ (i=1...32) dans l'emplacement de mesure 38, à environ 6 mètres de la tête de mesure.

Les diodes et la carte électronique sont incluses dans le boîtier 20 à l'intérieur de l'habitacle du véhicule, alors que les extrémités des fibres optiques J1 à J32 ainsi que le dispositif de focalisation 36 sont seules disposées à l'extérieur du véhicule dans la tête de mesure 18.

Le dispositif d'émission et de projection des faisceaux lumineux 34 comporte d'autre part un dispositif de commutation électronique 50 faisant partie de l'unité centrale 22, et qui permet d'allumer et éteindre les différentes diodes électroluminescentes I1 à I8 à haute fréquence, à 3300 Hertz dans le mode de réalisation représenté.

Grâce à ce dispositif de commutation électronique 50, les huit diodes I1 à I8 sont allumées successivement, en séquence. Les trente-deux faisceaux sont donc allumés successivement, par groupes de quatre faisceaux (quatre fibres optiques sont connectées à chaque diode).

Les faisceaux émis C1 à C32 génèrent 32 rayonnements réfléchis K1 à K32. Ces rayonnements réfléchis sont exploités pour déterminer la valeur du coefficient de luminance rétroréfléchie pour chacune des surfaces marquées exploitées, donc dans l'exemple présenté, pour chacune des surfaces H11, H12, H22 et H23.

Les rayonnements réfléchis K1 à K32 sont focalisés par un dispositif de focalisation 46 interposé en amont des extrémités de fibres lumineuses L1 à L32, agencées pour recevoir les rayonnements réfléchis.

En outre, un écran 48 en deux parties 48A et 48B est interposé immédiatement en amont des extrémités des fibres optiques L1 à L32, de manière à limiter le rayonnement reçu par celle-ci à la bande centrale 40 à laquelle on veut limiter le rayonnement exploité. Grâce à l'écran 48, les rayonnements émis par les extrémités proximale et distale des ellipses E1 à E32 sont exclus du rayonnement réfléchi exploité.

Les fibres optiques L1 à L32 sont reliées à trente-deux photodiodes M1 à M32. Lors de la réception des rayonnements K1 à K32 réfléchis respectivement par les différentes ellipses éclairées E1 à E32, ces différentes photodiodes réagissent en délivrant des signaux électriques au moyen de traitement du signal 44, plus précisément à une carte électronique faisant partie de ces moyens et intégrée au boîtier 20 de l'unité centrale 22.

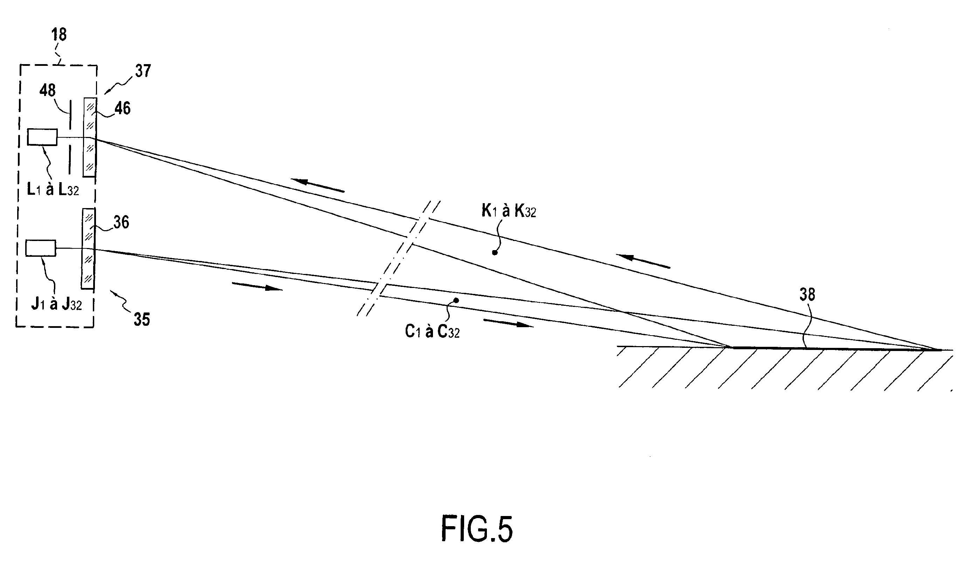

La figure 5 présente en vue de côté la position du faisceau lumineux incident et du rayonnement réfléchi lors des mesures. A l'intérieur de la tête de mesure 18, les éléments d'émission 35 sont situés en dessous des éléments de réception 37 du dispositif de mesure 10. Les faisceaux incidents C1 à C32 sont émis aux extrémités des fibres J1 à J32, focalisés par le dispositif de focalisation 36 et projetés en direction de la surface mesurée 38.

Sous l'effet de ces faisceaux incidents C1 à C32, la surface mesurée 38 réémet des rayonnements réfléchis K1 à K32.

Une partie de ces rayonnement est captée par le dispositif de focalisation 46 ; comme cela a été indiqué, seule les parties médianes de ces rayonnements, provenant de la bande mesurée 40, franchissent l'écran 48. Ces rayonnements sont alors focalisés par le dispositif de focalisation 46 pour pénétrer dans les extrémités des différentes fibres optiques de réception L1 à L32.

L'effet de l'écran ou diaphragme 48 est illustré par les figures 6 et 7. La figure 6 montre la forme, dans une section, du rayonnement réfléchi Kᵢ (i variant entre 1 et 32), en sortie du dispositif de focalisation 46, en amont de l'écran 48. La direction d'observation est perpendiculaire à la direction du rayonnement.

L'effet du diaphragme ou écran 48 est d'éliminer les parties hautes et basses du rayonnement rétroréfléchi. Ces parties hautes et basses proviennent en effet des extrémités respectivement proximale et distale, par rapport à la tête de mesure, des ellipses Eᵢ, que l'on ne souhaite pas exploiter pour la mesure, cela notamment pour faciliter la mesure de biais (c'est-à-dire avec un angle α non nul). En ne conservant du rayonnement réfléchi Kᵢ que sa partie médiane, en aval de l'écran 48 (figure 7), on ne dirige dans les fibres de réception L1 à L32, que le rayonnement provenant de la bande centrale 40, seul ce rayonnement devant être exploité pour déterminer le coefficient de luminance R_{L}.

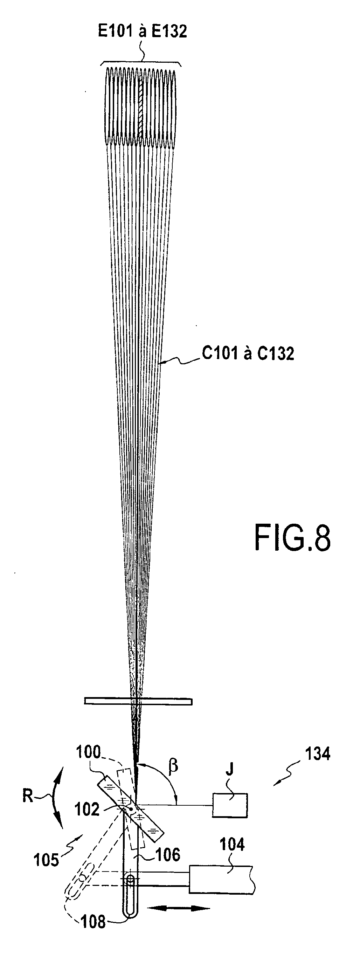

Un autre mode de réalisation pour le dispositif d'émission et de projection de faisceau lumineux est illustré par la figure 8.

Dans ce dispositif 134, comme dans le dispositif 34 du dispositif de mesure 10 présenté précédemment, la lumière est émise par un système de diodes électroluminescentes. En revanche, avantageusement le dispositif 134 ne comporte qu'une diode électroluminescente (non représentée), constituant une source lumineuse, déportée par rapport au point de projection. Pour réaliser une mesure, cette diode émet un ensemble d'impulsions lumineuses successives, transmises par une fibre optique J.

Chacune de ces impulsions, en sortie de la fibre optique J, est émise vers la surface d'un miroir plan 100 pivotant ou oscillant, qui réfléchit le faisceau ainsi émis dans la direction d'éclairage souhaitée. L'extrémité de la fibre optique J associée au miroir 100 constitue ainsi un projecteur du dispositif d'émission et de projection de faisceau.

Le miroir 100 est monté mobile en rotation autour d'un axe 102 (flèche R), perpendiculaire à la direction d'arrivée des impulsions lumineuses, et à la direction de mesure (voisine de l'axe du véhicule et de la chaussée). Ce miroir 100 est actionné en rotation autour de son axe par un dispositif de pivot 105. Ce dispositif 105 comporte principalement un vérin 104 et un bras d'actionnement 106 fixé sur le miroir 100. Une extrémité 108 du bras d'actionnement 106 est fixée à l'extrémité d'actionnement du vérin 104. Ainsi, les déplacements axiaux du vérin 104 entrainent des rotations correspondantes du miroir 100. Plus généralement, tout système d'entrainement en rotation de spécifications adaptées peut être utilisé pour entrainer en rotation le miroir 100.

La position du miroir 100 est pilotée par une unité de commande non représentée, qui commande le déplacement du vérin 104. Le miroir 100 est piloté de manière à réfléchir les impulsions lumineuses successivement dans trente-deux directions d'éclairage, formant ainsi trente-deux faisceaux C101 à C132. La direction d'éclairage forme un angle β (figure 2), par rapport à la direction fixe du faisceau projeté par l'extrémité de la fibre optique J. Les différents faisceaux C101 à C132 sont projetés dans des directions d'éclairage successives, obtenues pour chaque nouveau faisceau en faisant pivoter le miroir 100 d'un angle élémentaire de manière à incrémenter régulièrement l'angle β.

Les faisceaux C101 à C132 éclairent ainsi successivement trente-deux surfaces éclairées élémentaires en forme d'ellipse E101 à E132.

L'exploitation des rayonnements réfléchis suite à l'illumination successive de ces trente-deux ellipses est faite de la même manière que dans le dispositif de mesure précédemment décrit, à cela près que les faisceaux incidents (et donc les rayonnements émis) sont formés successivement, alors que dans le dispositif de mesure 100, la mesure était réalisée au moyen de huit illuminations successives, chacune comportant quatre faisceaux lumineux.

## Revendications

1. Dispositif (10) pour mesurer le coefficient de luminance rétroréfléchie (R_{L}) de marquages routiers (16, 28, 32) à des emplacements de mesure (38) successifs, apte à être embarqué sur un véhicule (12), comprenant
un dispositif d'émission et projection de faisceau lumineux (34, 134) en lumière non cohérente, apte à projeter un faisceau lumineux vers une surface de mesure (38), un faisceau lumineux étant défini comme un rayonnement lumineux, projeté continûment pendant un laps de temps, dans un angle solide connexe donné ;
des moyens d'acquisition (42) du rayonnement lumineux réfléchi par la surface de mesure ; et
des moyens (44) de traitement du signal, aptes à déterminer le coefficient de luminance rétroréfléchie (R_{L}) à partir des signaux délivrés par les moyens d'acquisition ;
**caractérisé en ce que** ledit dispositif d'émission et projection de faisceau lumineux est agencé pour projeter une pluralité de faisceaux lumineux (C1 à C32 ; C101 à C132) éclairant chacun une surface éclairée élémentaire (E1 à E32; E101 à E132), lors d'une mesure du coefficient de luminance rétroréfléchie (R_{L}) du marquage à un emplacement de mesure, et cela de telle sorte que, une surface éclairée cumulée (41) étant la réunion des surfaces éclairées élémentaires, à chaque instant pendant la mesure audit emplacement, la surface éclairée est strictement incluse dans la surface éclairée cumulée (41).

2. Dispositif selon la revendication 1, agencé de telle sorte que, lors d'une mesure du coefficient de luminance rétroréfléchie du ou des marquages à un emplacement, la surface éclairée cumulée (41) est strictement incluse dans son enveloppe convexe.

3. Dispositif selon la revendication 1 ou 2, agencé de telle sorte que, lors d'une mesure du coefficient de luminance rétroréfléchie du ou des marquages à un emplacement, les surfaces éclairées élémentaires (E1 à E32; E101 à E132) sont sensiblement disjointes deux à deux.

4. Dispositif selon l'une quelconque des revendications 1 à 3, dont le dispositif d'émission et projection de faisceau lumineux (34,134) comporte une pluralité de projecteurs, aptes à former simultanément une pluralité de faisceaux lumineux (C1 à C32).

5. Dispositif selon l'une quelconque des revendications 1 à 3, dont le dispositif d'émission et projection de faisceau lumineux comporte un dispositif de pivot (105) permettant de diriger des faisceaux (C101 à C132) suivant différentes directions d'éclairage.

6. Dispositif selon la revendication 5, et dont le dispositif de pivot comporte un miroir pivotant (100).

7. Dispositif selon l'une quelconque des revendications 1 à 6, dont le dispositif d'émission et projection de faisceau lumineux comporte une source lumineuse (I1 à I8), et un dispositif de commutation électronique (50) qui allume et éteint successivement celle-ci.

8. Dispositif selon l'une quelconque des revendications 1 à 7, dont le dispositif d'émission et projection de faisceau lumineux (34) comporte au moins deux sources lumineuses (I1 à I8).

9. Dispositif selon la revendication 8, dont le dispositif de commutation électronique (50) présente un mode séquentiel qui est adapté pour allumer et éteindre lesdites sources lumineuses (I1 à I8) séquentiellement.

10. Dispositif selon l'une quelconque des revendications 1 à 9, dont le dispositif d'acquisition (42) comporte un écran (48) limitant l'amplitude verticale d'un rayonnement lumineux réfléchi (K1 à K32) exploité pour la mesure.

11. Dispositif selon l'une quelconque des revendications 1 à 10, comportant au moins une source lumineuse déportée (I1 à I8), dont la lumière est conduite par fibre optique (J1 à J32) jusqu'à un projecteur du dispositif d'émission et de projection de faisceau.

12. Dispositif selon la revendication 11, dont le dispositif d'émission et projection de faisceau lumineux comporte une source lumineuse (I1 à I8) et au moins deux fibres optiques (J1 à J32) conduisant la lumière émise par celle-ci.

13. Dispositif selon l'une quelconque des revendications 1 à 12, dont le dispositif (34,134) d'émission et projection de faisceau lumineux comporte au moins un projecteur projetant un faisceau lumineux de biais par rapport à l'axe (A) du véhicule (12), les moyens d'acquisition (42) étant disposés également de manière à recevoir le rayonnement réfléchi (K1 à K32) de biais par rapport à l'axe du véhicule.

14. Procédé de mesure à des emplacements successifs du coefficient de luminance rétroréfléchie (R_{L}) d'un marquage routier, le procédé étant **caractérisé en ce que** pour réaliser une mesure à un emplacement, il comprend les étapes suivantes :
on projette une pluralité de faisceaux lumineux (C1 à C32 ; C101 à C132 ) de lumière non cohérente, chacun éclairant une surface éclairée élémentaire (E1 à E32; E101 à E132);
on réalise l'acquisition des rayonnements lumineux réfléchis (K1 à K32) à l'aide de moyens d'acquisition (42),
on traite les signaux ainsi acquis pour déterminer le coefficient de luminance rétroréfléchie du marquage routier audit emplacement,
la projection des faisceaux lumineux étant telle que, une surface éclairée cumulée étant la réunion des surfaces éclairées élémentaires, à chaque instant pendant la mesure audit emplacement, la surface éclairée est strictement incluse dans la surface éclairée cumulée (41).

## Claims

1. A device (10) for measuring the coefficient of retroreflected luminance (R_{L}) of road markings (16, 28, 32) at successive measurement locations (38), the device being suitable for mounting on board a vehicle (12) and comprising:
a light beam emission and projection device (34, 134) suitable for projecting a light beam of non-coherent light towards a measurement surface (38), a light beam being defined as light radiation projected continuously over a lapse of time in a given connected solid angle;
acquisition means (42) for acquiring the light radiation reflected by the measurement surface; and
signal processor means (44) suitable for determining the coefficient of retroreflected luminance (R_{L}) from the signals delivered by the acquisition means;
the device being **characterized in that** said light beam emission and projection device is arranged to project a plurality of light beams (C1 to C32; C101 to C132), each illuminating an individual illuminated surface (E1 to E32; E101 to E132) while measuring the coefficient of retroreflected luminance (R_{L}) of the marking at a measurement location, and to do so in such a manner that for a cumulative illuminated surface (41) being the union of the individual illuminated surfaces, at each instant during the measurement at said location, the illuminated surface is strictly included within the cumulative illuminated surface (41).

2. A device according to claim 1, arranged in such a manner that during a measurement of the coefficient of retroreflected luminance of the marking(s) at a location, the cumulative illuminated surface (41) is strictly included within its connected envelope.

3. A device according to claim 1 or claim 2, arranged in such a manner that, while measuring a coefficient of retroreflected luminance of the marking(s) at a location, the individual illuminated surfaces (E1 to E32; E101 to E132) are substantially disjoint in pairs.

4. A device according to any one of claims 1 to 3, wherein the light beam emission and projection device (34, 134) comprises a plurality of projectors, suitable for forming a plurality of light beams (C1 to C32) simultaneously.

5. A device according to any one of claims 1 to 3, wherein the light beam emission and projection device includes a pivot device (105) enabling beams (C101 to C132) to be directed in different illuminating directions.

6. A device according to claim 5, wherein the pivot device comprises a pivotable mirror (100).

7. A device according to any one of claims 1 to 6, wherein the light beam emission and projection device includes a light source (I1 to I8) and an electronic switch device (50) that switches it on and off in succession.

8. A device according to any one of claims 1 to 7, wherein the light beam emission and projection device (34) includes at least two light sources (I1 to I8).

9. A device according to claim 8, wherein the electronic switch device (50) presents a sequential mode that is adapted to switching said light sources (I1 to I8) on and off sequentially.

10. A device according to any one of claims 1 to 9, wherein the acquisition device (42) includes a screen (48) limiting the vertical amplitude of the reflected light radiation (K1 to K32) used for the measurement.

11. A device according to any one of claims 1 to 10, including at least one offset light source (I1 to I8) from which the light is conveyed by optical fiber (J1 to J32) to a projector of the beam emission and projection device.

12. A device according to claim 11, wherein the light beam emission and projection device includes a light source (I1 to I8) and at least two optical fibers (J1 to J32) conveying the light emitted thereby.

13. A device according to any one of claims 1 to 12, wherein the light beam emission and projection device (34, 134) includes at least one projector projecting a light beam at an angle relative to the axis (A) of the vehicle (12), the acquisition means (42) being likewise arranged in such a manner as to receive the reflected radiation (K1 to K32) at an angle relative to the axis of the vehicle.

14. A method of measuring the coefficient of retroreflected luminance (R_{L}) of road marking, the method being **characterized in that** in order to perform a measurement at a location, the method comprises the following steps:
projecting a plurality of light beams (C1 to C32; C101 to C132) of non-coherent light, each beam illuminating an individual illuminated surface (E1 to E32; E101 to E132);
acquiring reflected light radiation (K1 to K32) with the help of acquisition means (42); and
processing the signals as acquired in this way in order to determine the coefficient of retroreflected luminance of the road marking at said location;
the projection of the light beams being such that for a cumulative illuminated surface being the union of the individual illuminated surfaces, at each instant during the measurement at said location the illuminated surface is strictly included within the cumulative illuminated surface (41).

## Patentansprüche

1. Vorrichtung (10) zur Messung des Koeffizienten der retroreflektierten Leuchtdichte (R_{L}) von Fahrbahnmarkierungen (16, 28, 32) an aufeinanderfolgenden Meßstellen (38), die geeignet ist, an Bord eines Fahrzeugs (12) angebracht zu werden, umfassend
eine Vorrichtung zum Aussenden und Projizieren eines Lichtstrahls (34, 134) aus nicht kohärentem Licht, die geeignet ist, einen Lichtstrahl in Richtung einer Meßfläche (38) zu projizieren, wobei ein Lichtstrahl als eine Lichtstrahlung definiert ist, die kontinuierlich während eines Zeitraums in einem gegebenen, festen zusammenhängenden Winkel projiziert wird,
Mittel zur Aufnahme (42) der durch die Meßfläche reflektierten Lichtstrahlung und
Mittel (44) zur Verarbeitung des Signals, die geeignet sind, den Koeffizienten der retroreflektierten Leuchtdichte (R_{L}) anhand der durch die Aufnahmemittel gelieferten Signale zu bestimmen,
**dadurch gekennzeichnet, daß** die Vorrichtung zum Aussenden und Projizieren eines Lichtstrahls angeordnet ist, um während einer Messung des Koeffizienten der retroreflektierten Leuchtdichte (R_{L}) der Markierung an einer Meßstelle eine Vielzahl von Lichtstrahlen (C1 bis C32; C101 bis C132), die jeweils eine beleuchtete Einzelfläche (E1 bis E32; E101 bis E132) beleuchten, zu projizieren, und dies derart, daß - da eine kumulierte beleuchtete Fläche (41) die Verbindung der beleuchteten Einzelflächen ist - zu jedem Zeitpunkt während der Messung an der genannten Stelle die beleuchtete Fläche strikt in der kumulierten beleuchteten Fläche (41) enthalten ist.

2. Vorrichtung nach Anspruch 1, die derart angeordnet ist, daß während einer Messung des Koeffizienten der retroreflektierten Leuchtdichte der Markierung oder Markierungen an einer Stelle die kumulierte beleuchtete Fläche (41) strikt in ihrer konvexen Hülle enthalten ist.

3. Vorrichtung nach Anspruch 1 oder 2, die derart angeordnet ist, daß während einer Messung des Koeffizienten der retroreflektierten Leuchtdichte der Markierung oder Markierungen an einer Stelle die beleuchteten Einzelflächen (E1 bis E32; E101 bis E132) im wesentlichen paarweise disjunkt sind.

4. Vorrichtung nach einem der Ansprüche 1 bis 3, deren Vorrichtung zum Aussenden und Projizieren eines Lichtstrahls (34, 134) eine Vielzahl von Strahlern umfaßt, die geeignet sind, gleichzeitig eine Vielzahl von Lichtstrahlen (C1 bis C32) zu bilden.

5. Vorrichtung nach einem der Ansprüche 1 bis 3, deren Vorrichtung zum Aussenden und Projizieren eines Lichtstrahls eine Schwenkvorrichtung (105) umfaßt, die ermöglicht, Strahlen (C101 bis C132) entlang unterschiedlicher Beleuchtungsrichtungen zu lenken.

6. Vorrichtung nach Anspruch 5, und deren Schwenkvorrichtung einen schwenkbaren Spiegel (100) umfaßt.

7. Vorrichtung nach einem der Ansprüche 1 bis 6, deren Vorrichtung zum Aussenden und Projizieren eines Lichtstrahls eine Lichtquelle (11 bis 18) sowie eine elektronische Schaltvorrichtung (50), die diese nacheinander ein- und ausschaltet, umfaßt.

8. Vorrichtung nach einem der Ansprüche 1 bis 7, deren Vorrichtung zum Aussenden und Projizieren eines Lichtstrahls (34) wenigstens zwei Lichtquellen (I1 bis 18) umfaßt.

9. Vorrichtung nach Anspruch 8, deren elektronische Schaltvorrichtung (50) einen sequentiellen Modus aufweist, der dazu ausgelegt ist, die Lichtquellen (I1 bis I8) sequentiell ein- und auszuschalten.

10. Vorrichtung nach einem der Ansprüche 1 bis 9, deren Aufnahmevorrichtung (42) eine Abschirmung (48) umfaßt, die den vertikalen Ausschlag einer für die Messung genutzten reflektierten Lichtstrahlung (K1 bis K32) begrenzt.

11. Vorrichtung nach einem der Ansprüche 1 bis 10, wenigstens umfassend eine versetzte Lichtquelle (I1 bis 18), deren Licht über Lichtleitfaser (J1 bis J32) bis zu einem Strahler der Vorrichtung zum Aussenden und Projizieren eines Strahls geleitet wird.

12. Vorrichtung nach Anspruch 11, deren Vorrichtung zum Aussenden und Projizieren eines Lichtstrahls eine Lichtquelle (I1 bis I8) sowie wenigstens zwei Lichtleitfasern (J1 bis J32), die das von dieser ausgesandte Licht leiten, umfaßt.

13. Vorrichtung nach einem der Ansprüche 1 bis 12, deren Vorrichtung (34, 134) zum Aussenden und Projizieren eines Lichtstrahls wenigstens einen Strahler umfaßt, der einen Lichtstrahl schräg zu der Achse (A) des Fahrzeugs (12) projiziert, wobei die Aufnahmemittel (42) ebenfalls derart angeordnet sind, daß sie die reflektierte Strahlung (K1 bis K32) schräg zu der Achse des Fahrzeugs aufnehmen.

14. Verfahren zur Messung des Koeffizienten der retroreflektierten Leuchtdichte (R_{L}) einer Fahrbahnmarkierung an aufeinanderfolgenden Stellen, wobei das Verfahren **dadurch gekennzeichnet ist, daß** es für die Durchführung einer Messung an einer Stelle die folgenden Schritte umfaßt:
es wird eine Vielzahl von Lichtstrahlen (C1 bis C32; C101 bis C132) von nicht kohärentem Licht projiziert, wobei ein jeder eine beleuchtete Einzelfläche (E1 bis E32; E101 bis E132) beleuchtet,
es erfolgt die Aufnahme der reflektierten Lichtstrahlungen (K1 bis K32) mit Hilfe von Aufnahmemitteln (42),
die so erfaßten Signale werden verarbeitet, um den Koeffizienten der retroreflektierten Leuchtdichte der Fahrbahnmarkierung an der Stelle zu bestimmen,
wobei die Projektion der Lichtstrahlen derart ist, daß - da eine kumulierte beleuchtete Fläche die Verbindung der beleuchteten Einzelflächen ist - zu jedem Zeitpunkt während der Messung an der genannten Stelle die beleuchtete Fläche strikt in der kumulierten beleuchteten Fläche (41) enthalten ist.
